# EUROPÄISCHE PATENTSCHRIFT

(11) **EP 2 082 143 B1**
(45) Veröffentlichungstag und Bekanntmachung des Hinweises auf die Patenterteilung: **11.08.2010**
(21) Anmeldenummer: 06806382.5
(22) Anmeldetag: 19.10.2006
(51) Int. Cl.: F16B 41/00, F16B 43/00

(54) **KOMBINATION AUS EINER SCHRAUBE, EINER UNTERLEGSCHEIBE UND EINER HÜLSE SOWIE VERFAHREN ZUM HERSTELLEN EINER SOLCHEN KOMBINATION**
COMBINATION OF A SCREW, A WASHER, AND A SLEEVE, AND METHOD FOR THE PRODUCTION OF SUCH A COMBINATION
ASSOCIATION COMPOSÉE D'UNE VIS, D'UNE RONDELLE ET D'UNE DOUILLE, ET PROCÉDÉ DE PRODUCTION D'UNE TELLE COMBINAISON

(43) Veröffentlichungstag der Anmeldung: 29.07.2009
(73) Patentinhaber: ElringKlinger AG, 72581 Dettingen (DE)
(72) Erfinder: BAUER, Robert, 89365 Röfingen (DE); VÖLK, Stephan, 86316 Friedberg (DE)
(74) Vertreter: Hörner, Andreas
(86) Internationale Anmeldenummer: PCT/EP2006/010069
(87) Internationale Veröffentlichungsnummer: WO 2008/046437

(56) Entgegenhaltungen:
- EP-A- 0 751 305

## Beschreibung

Die vorliegende Erfindung betrifft eine Kombination aus einer Schraube mit einem Schraubenkopf, einem Gewindebereich und einem zwischen dem Schraubenkopf und dem Gewindebereich angeordneten Schaftbereich, dessen Außendurchmesser kleiner ist als der Außendurchmesser des Gewindebereichs, einer Unterlegscheibe mit einer Durchtrittsöffnung für die Schraube und einer Hülse, deren Innendurchmesser größer ist als der Außendurchmesser des Gewindebereichs der Schraube.

Eine solche Kombination ist aus der DE 199 24 502 C2 bekannt. Bei dieser bekannten Kombination ist die Hülse durch eine Klebe-, Schweiß- oder Lötverbindung an der Unterlegscheibe befestigt. Die Unterlegscheibe und/oder die Hülse sind geschlitzt, damit sich die Hülse und/oder die Unterlegscheibe beim Überstreifen der durch die Unterlegscheibe gebildeten Engstelle über den Gewindebereich der Schraube aufweiten und wieder zurückschnappen, nachdem die Engstelle vollständig über den Gewindebereich geschoben ist.

Nach dem Zurückschnappen sind die Unterlegscheibe und die Hülse unverlierbar an der Schraube gehalten.

Eine weitere Kombination aus einer Schraube und einer Unterlegscheibe sowie einer Hülse, die unverlierbar an der Schraube gehalten sind, ist aus der DE 195 10 349 A1 bekannt. Bei dieser Kombination weist die Unterlegscheibe eine tiefgezogene Öffnung mit einem Kragen auf, der von der Hülse klemmend umschlossen wird. Zur Klemmung des Kragens der Unterlegscheibe muss die Innenseite der Hülse an ihrem schraubenkopfseitigen Ende mit einer Fase versehen werden. Der Halt der Hülse an der Unterlegscheibe, der nur durch die Klemmwirkung des in die Hülse hineinragenden Kragens bewirkt wird, ist nicht besonders sicher.

Die EP 0 751 305 A offenbart eine Kombination gemäß dem Oberbegriff von Anspruch 1.

Der vorliegenden Erfindung liegt die Aufgabe zugrunde, eine Kombination der eingangs genannten Art zu schaffen, welche einfach herstellbar ist und dennoch einen sicheren Halt der Hülse und der Unterlegscheibe an der Schraube gewährleistet.

Diese Aufgabe wird durch eine Kombination nach Anspruch 1 gelöst.

Der vorliegenden Erfindung liegt das Konzept zugrunde, den Gewindebereich der Schraube durch den zweiten Bereich der Durchtrittsöffnung der Unterlegscheibe, der einen Durchmesser aufweist, welcher größer ist als der Außendurchmesser des Gewindebereichs der Schraube, hindurchzuführen, bis der Schaftbereich der Schraube im Bereich der Durchtrittsöffnung zu liegen kommt, und dann den Schaftbereich der Schraube von dem zweiten Bereich der Durchtrittsöffnung in den ersten Bereich der Durchtrittsöffnung zu überführen, durch welchen der Gewindebereich der Schraube, dessen Außendurchmesser größer ist als der Durchmesser des ersten Bereichs der Durchtrittsöffnung, nicht mehr zurückbewegt werden kann. Dadurch ist die Unterlegscheibe in einfacher Weise unverlierbar an der Schraube gehalten.

Die Hülse wird ihrerseits dadurch unverlierbar an der Schraube gehalten, dass sie mit der Unterlegscheibe verbunden wird.

Die Verbindung zwischen der Hülse und der Unterlegscheibe kann dabei direkt oder indirekt, mit Hilfe eines zusätzlichen Bauelements, das einerseits mit der Hülse und anderseits mit der Unterlegscheibe verbunden ist, erfolgen.

Da der Gewindebereich der Schraube durch den zweiten Bereich der Durchtrittsöffnung der Unterlegscheibe hindurchbewegt werden kann, ist es nicht erforderlich, eine geschlitzte Unterlegscheibe und/oder eine geschlitzte Hülse zu verwenden; vielmehr können bei der erfindungsgemäßen Kombination eine schlitzfreie Hülse und eine schlitzfreie Unterlegscheibe benutzt werden.

Bei einer bevorzugten Ausgestaltung der Erfindung ist vorgesehen, dass der erste Bereich und der zweite Bereich der Durchtrittsöffnung so miteinander in Verbindung stehen, dass die Schraube von dem zweiten Bereich in den ersten Bereich der Durchtrittsöffnung überführbar ist, wenn sich der Schaftbereich der Schraube durch die Durchtrittsöffnung der Unterlegscheibe hindurch erstreckt.

Im montierten Zustand der Kombination erstreckt sich der Schaftbereich der Schraube vorzugsweise durch den ersten Bereich der Durchtrittsöffnung der Unterlegscheibe hindurch.

Grundsätzlich können der erste Bereich und der zweite Bereich der Durchtrittsöffnung überlappungsfrei an der Unterlegscheibe vorgesehen und durch einen dazwischen angeordneten Kanal miteinander verbunden sein.

Bei einer bevorzugten Ausgestaltung der Erfindung ist jedoch vorgesehen, dass der erste Bereich und der zweite Bereich der Durchtrittsöffnung der Unterlegscheibe einander teilweise überlappen. Durch diese Überlappung wird der insgesamt von der Durchtrittsöffnung der Unterlegscheibe eingenommene Anteil der Unterlegscheibe verringert, so dass die wirksame Fläche der Unterlegscheibe, mit welcher die Unterlegscheibe an dem Schraubenkopf anliegt, möglichst groß gehalten wird.

Das Zentrum des ersten Bereichs der Durchtrittsöffnung der Unterlegscheibe ist im wesentlichen mittig an der Unterlegscheibe angeordnet. Dadurch wird erreicht, dass die Schraube im montierten Zustand der Kombination im wesentlichen koaxial zu der Unterlegscheibe angeordnet ist.

Das Zentrum des zweiten Bereichs der Durchtrittsöffnung der Unterlegscheibe ist hingegen vorzugsweise relativ zu dem Zentrum des ersten Bereichs der Durchtrittsöffnung der Unterlegscheibe nach außen, d.h. zu dem äußeren Rand der Unterlegscheibe hin, versetzt.

Bei einer Ausgestaltung der erfindungsgemäßen Kombination ist vorgesehen, dass der Rand des ersten Bereichs der Durchtrittsöffnung der Unterlegscheibe und der Rand des zweiten Bereichs der Durchtrittsöffnung der Unterlegscheibe an einem Übergangsbereich ineinander übergehen, wobei der Rand des Übergangsbereichs - von dem Zentrum des ersten Bereichs der Durchtrittsöffnung aus gesehen - konvex gekrümmt ist. Bei dieser Ausgestaltung der Erfindung ergibt sich eine im wesentlichen schlüssellochförmige Durchtrittsöffnung.

Alternativ hierzu ist bei einer zweiten Ausgestaltung der Erfindung vorgesehen, dass der Rand des ersten Bereichs der Durchtrittsöffnung der Unterlegscheibe und der Rand des zweiten Bereichs der Durchtrittsöffnung der Unterlegscheibe an einem Übergangsbereich ineinander übergehen, wobei der Rand des Übergangsbereichs im wesentlichen tangential zu dem Rand des ersten Bereichs der Durchtrittsöffnung und/oder im wesentlichen tangential zu dem Rand des zweiten Bereichs der Durchtrittsöffnung verläuft. Bei dieser Ausgestaltung kann der Gewindebereich der Schraube besonders einfach durch den zweiten Bereich der Durchtrittsöffnung der Unterlegscheibe hindurchgeführt werden.

Um die Hülse indirekt mit der Unterlegscheibe verbinden zu können, kann vorgesehen sein, dass die Kombination mindestens ein ringförmiges Element umfasst, das an der Unterlegscheibe festgelegt ist und eine Aufnahme für ein schraubenkopfseitiges Ende der Hülse aufweist.

Das ringförmige Element kann als ein elastisches Element ausgebildet sein, um eine Schwingungsentkopplung der Kombination von den durch die Kombination miteinander zu verbindenden Bauteilen zu erzielen.

Das ringförmige Element kann insbesondere ein Elastomermaterial umfassen.

Das schraubenkopfseitige Ende der Hülse kann form- und/oder kraftschlüssig an dem ringförmigen Element gehalten sein.

Insbesondere kann vorgesehen sein, dass das schraubenkopfseitige Ende der Hülse mit dem ringförmigen Element verrastet ist.

Das ringförmige Element kann grundsätzlich in beliebiger Weise an der Unterlegscheibe festgelegt sein.

Eine besonders haltbare und einfach herzustellende Verbindung des ringförmigen Elements mit der Unterlegscheibe ergibt sich, wenn das ringförmige Element mit der Unterlegscheibe verklebt ist.

Die vorliegende Erfindung betrifft ferner ein Verfahren zum Herstellen einer Kombination aus einer Schraube mit einem Schraubenkopf, einem Gewindebereich und einem zwischen dem Schraubenkopf und dem Gewindebereich angeordneten Schaftbereich, dessen Außendurchmesser kleiner ist als der Außendurchmesser des Gewindebereichs,
einer Unterlegscheibe mit einer Durchtrittsöffnung für die Schraube und einer Hülse, deren Innendurchmesser größer ist als der Außendurchmesser des Gewindebereichs der Schraube.

Der vorliegenden Erfindung liegt die weitere Aufgabe zugrunde, ein Verfahren zum Herstellen einer solchen Kombination zu schaffen, welches einfach durchführbar ist und zu einem sicheren Halt der Hülse und der Unterlegscheibe untereinander und an der Schraube führt.

Diese Aufgabe wird erfindungsgemäß durch ein Verfahren gelöst, das folgende Verfahrensschritte umfasst:
- Bereitstellen einer Unterlegscheibe mit einer Durchtrittsöffnung, die einen ersten Bereich umfasst, welcher einen Durchmesser aufweist, der größer ist als der Außendurchmesser des Schaftbereichs der Schraube und kleiner ist als der Außendurchmesser des Gewindebereichs der Schraube, wobei das Zentrum des ersten Bereichs der Durchgangsöffnung der Unterlegscheibe im wesentlichen mittig an der Unterlegscheibe angeordnet ist, und einen zweiten Bereich, welcher einen Durchmesser aufweist, der größer ist als der Außendurchmesser des Gewindebereichs der Schraube;

- Einstecken der Schraube in die Durchtrittsöffnung der Unterlegscheibe derart, dass der Gewindebereich der Schraube sich durch den zweiten Bereich der Durchtrittsöffnung der Unterlegscheibe hindurchbewegt, bis der Schaftbereich der Schraube sich durch die Durchtrittsöffnung hindurch erstreckt;
- Überführen des Schaftbereichs der Schraube von dem zweiten Bereich der Durchtrittsöffnung der Unterlegscheibe in den ersten Bereich der Durchtrittsöffnung der Unterlegscheibe;
- Einstecken der Schraube in die Hülse;
- Verbinden der Hülse mit der Unterlegscheibe derart, dass die Hülse und die Unterlegscheibe unverlierbar an der Schraube gehalten sind.

Eine bevorzugte Ausgestaltung dieses Verfahrens umfasst ferner folgendes:
- Festlegen eines ringförmigen Elements an der Unterlegscheibe;
- Verbinden der Hülse mit dem ringförmigen Element derart, dass die Hülse, das ringförmige Element und die Unterlegscheibe unverlierbar an der Schraube gehalten sind.

Dabei kann das ringförmige Element vor oder nach dem Einstecken der Schraube in die Durchtrittsöffnung der Unterlegscheibe an der Unterlegscheibe festgelegt werden, beispielsweise durch Verklebung.

Weitere Merkmale und Vorteile der Erfindung sind Gegenstand der nachfolgenden Beschreibung und der zeichnerischen Darstellung von Ausführungsbeispielen.

In den Zeichnungen zeigen:
- Fig. 1: einen schematischen Schnitt durch eine Baugruppe aus einem ersten Bauteil und einem zweiten Bauteil, die mittels einer Schraube mit unverlierbar an der Schraube gehaltener Unterleg- scheibe und Hülse sowie mittels Elastomerelementen schwin- gungsentkoppelt aneinander festgelegt sind;
- Fig. 2: einen schematischen Längsschnitt durch die Schraube mit Unter- legscheibe, Hülse und Elastomerelement aus Fig. 1;
- Fig. 3: eine Draufsicht von oben auf die Unterlegscheibe aus den Fig. 1 und 2;
- Fig. 4: eine schematische perspektivische Darstellung der in die Unter- legscheibe eingesteckten Schraube und der Hülse;
- Fig. 5: eine Draufsicht von oben auf eine zweite Ausführungsform einer Unterlegscheibe mit einer anders geformten Durchtrittsöffnung; und
- Fig. 6: eine schematische perspektivische Darstellung des Vorgangs des Einsteckens der Schraube in die Unterlegscheibe.

Gleiche oder funktional äquivalente Elemente sind in allen Figuren mit denselben Bezugszeichen bezeichnet.

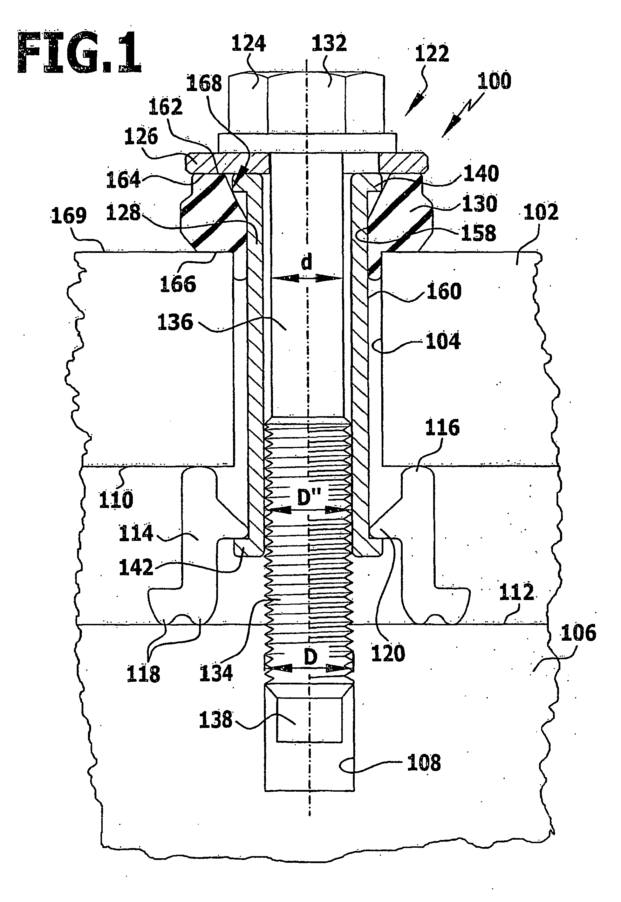

Eine in Fig. 1 ausschnittsweise dargestellte, als Ganzes mit 100 bezeichnete Baugruppe umfasst ein erstes Bauteil 102 mit einer im wesentlichen zylindrischen Durchtrittsöffnung 104, ein zweites Bauteil 106 mit einem Gewindesackloch 108, ein zwischen einer Unterseite 110 des ersten Bauteils 102 und einer Oberseite 112 des zweiten Bauteils 106 angeordnetes ringförmiges elastomeres Dichtelement 114 mit einer oberen Dichtlippe 116 und unteren Dichtlippen 118 sowie einem radial in den Innenraum des elastomeren Dichtelements 114 vorstehenden Bund 120, und eine Kombination 122 aus einer Schraube 124, einer unverlierbar an der Schraube 124 gehaltenen Unterlegscheibe 126, einer unverlierbar an der Schraube 124 gehaltenen hohlzylindrischen Hülse 128 und einem einen schraubenkopfseitigen Endbereich der Hülse 128 ringförmig umgebenden, ringförmigen Element 130, das, beispielsweise durch Verklebung, an der Unterlegscheibe 126 festgelegt ist.

Die Schraube 124 umfasst einen Schraubenkopf 132, der beispielsweise als ein Sechskant-Schraubenkopf ausgebildet sein kann, einen Gewindebereich 134 mit einem Außendurchmesser D, einen zwischen dem Gewindebereich 134 und dem Schraubenkopf 132 angeordneten Schaftbereich 136, dessen Außendurchmesser d kleiner ist als der Außendurchmesser D des Gewindebereichs 134, und einen sich an die dem Schraubenkopf 132 abgewandte Seite des Gewindebereichs 134 anschließenden Endbereich 138, dessen Außendurchmesser kleiner ist als der Außendurchmesser D des Gewindebereichs 134 und kleiner ist als der Außendurchmesser d des Schaftbereichs 134 der Schraube 124.

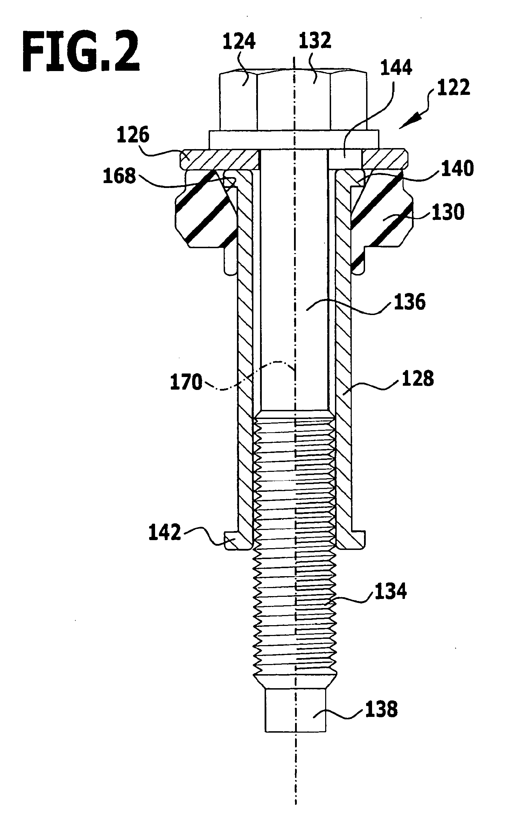

Die Hülse 128 ist, wie am besten aus den Fig. 1 und 2 zu ersehen ist, hohlzylindrisch ausgebildet und an ihrem schraubenkopfseitigen Ende mit einem in radialer Richtung nach außen abstehenden schraubenkopfseitigen Bund 140 und an ihrem dem Schraubenkopf 132 abgewandten Ende mit einem in radialer Richtung nach außen abstehenden gewindebereichseitigen Bund 142 versehen.

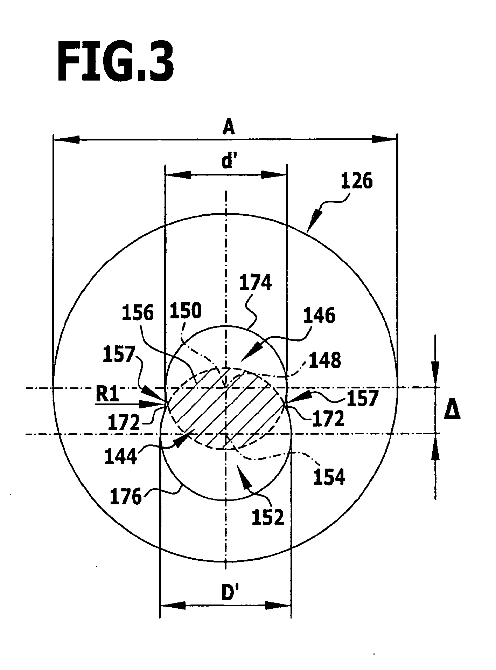

Wie am besten aus Fig. 3 zu ersehen ist, ist die Unterlegscheibe 126 als eine im wesentlichen ebene, kreisförmige Scheibe mit dem Außendurchmesser A ausgebildet, die mit einer Durchtrittsöffnung 144 versehen ist, welche einen ersten kreisförmigen Bereich 146, dessen Mittelpunkt oder Zentrum 148 mit der Mittelachse 150 der Unterlegscheibe 126 zusammenfällt, und einen zweiten kreisförmigen Bereich 152, dessen Mittelpunkt oder Zentrum 154 gegenüber dem Zentrum 148 um die Strecke Δ in einer radial zur Mittelachse 150 gerichteten Richtung nach außen versetzt ist, umfasst.

Der erste, mittig an der Unterlegscheibe 126 angeordnete Bereich 146 der Durchtrittsöffnung 144 weist einen Durchmesser d' auf, welcher größer ist als der Außendurchmesser d des Schaftbereichs 136 der Schraube 124 und kleiner ist als der Außendurchmesser D des Gewindebereichs 134 der Schraube 124.

Der außermittig an der Unterlegscheibe 126 angeordnete zweite Bereich 152 der Durchtrittsöffnung 144 weist einen Durchmesser D' auf, welcher größer ist als der Außendurchmesser D des Gewindebereichs 134 der Schraube 124.

Wie aus Fig. 3 zu ersehen ist, überlappen sich der erste Bereich 146 und der zweite Bereich 152 der Durchtrittsöffnung 144 in dem durch Schraffur markierten Bereich 156.

Der kreisbogenabschnittsförmige Rand 174 des ersten Bereichs 146 der Durchtrittsöffrtung 144 und der kreisbogenabschnittsförmige Rand 176 des zweiten Bereichs 152 der Durchtrittsöffnung 144 gehen an zwei Übergangsbereichen 157 ineinander über, wobei die Ränder 172 der Übergangsbereiche 157 - von dem Zentrum 148 des ersten Bereichs 146 der Durchtrittsöffnung 144 aus gesehen - konvex gekrümmt sind (mit einem Krümmungsradius R₁).

Die Hülse 128, die Unterlegscheibe 126 und die Schraube 124 sind vorzugsweise aus einem metallischen Material, insbesondere aus einem Stahlmaterial, gebildet.

Das ringförmige Element 130 ist vorzugsweise aus einem elastischen Material, beispielsweise aus einem Elastomermaterial, gebildet.

Wie am besten aus Fig. 1 zu ersehen ist, weist das ringförmige Element 130 eine innere Anlagefläche 158 zur Anlage an der Außenseite 160 der Hülse 128, eine ebene unterlegscheibenseitige. Anlagefläche 162 zur Anlage an der Unterseite 164 der Unterlegscheibe 126 und eine der Unterlegscheibe 126 und dem Schraubenkopf 132 abgewandte Bauteilanlagefläche 166 zur Anlage an einer Oberseite 169 des ersten Bauteils 102 auf.

Das ringförmige Element 130 ist koaxial zu der Unterlegscheibe 126 angeordnet und an seiner unterlegscheibenseitigen Anlagefläche 162 mit der Unterseite 164 der Unterlegscheibe 126 verklebt.

Der uriterlegscheibenseitige obere Bereich der Innenseite des ringförmige Elements 130 ist angeschrägt, so dass der von dem ringförmigen Element 130 umgebene Innenraum sich zu der unterlegscheibenseitigen Anlagefläche 162 hin, beispielsweise konisch, erweitert und der unterlegscheibenseitige obere Abschnitt dieses Innenraums eine Aufnahme 168 für den schraubenkopfseitigen Bund 140 der Hülse 128 bildet. Der schräg zur Mittelachse des ringförmigen Elements 130 verlaufende Abschnitt der Innenwand des ringförmigen Elements 130 bildet eine Hinterschneidung, welche den schraubenkopfseitigen Bund 140 der Hülse 128 in der Aufnahme 168 zurückhält, wenn der schraubenkopfseitige Bund 140 in der Aufnahme 168 aufgenommen ist.

Um die Kombination 122 aus der Schraube 124, der unverlierbar an der Schraube 124 gehaltenen Unterlegscheibe 126, der unverlierbar an der Schraube 124 gehaltenen Hülse 128 und dem ringförmigen Element 130 herzustellen, wird wie folgt vorgegangen:

Zunächst wird das ringförmige Element 130 mit der Unterlegscheibe 126 verklebt.

Der Innenraum des ringförmigen Elements 130 ist so bemessen, dass es möglich ist, die Schraube 124 mit dem Gewindebereich 134 voran durch den außermittigen zweiten Bereich 152 der Unterlegscheibe 126 hindurchzustecken.

Anschließend wird die Schraube 124 derart in die Durchtrittsöffnung 144 der Unterlegscheibe 126 eingesteckt, dass der Gewindebereich 134 der Schraube 124 sich durch den zweiten Bereich 152 der Durchtrittsöffnung 144 der Unterlegscheibe 126 hindurchbewegt, bis der Schaftbereich 136 der Schraube 124 im Bereich der Durchtrittsöffnung 144 zu liegen kommt. Dies ist ohne weiteres möglich, da der zweite Bereich 152 der Durchtrittsöffnung 144 einen Durchmesser D' aufweist, welcher größer ist als der Außendurchmesser D des Gewindebereichs 134 der Schraube 124.

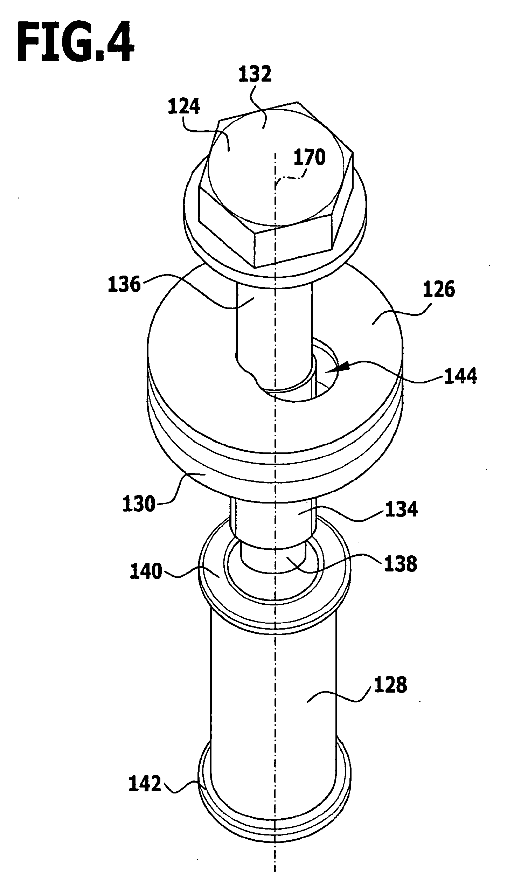

Anschließend wird der Schaftbereich 136 der Schraube 124 von dem zweiten Bereich 152 der Durchtrittsöffnung 144 der Unterlegscheibe 126 in den ersten Bereich 146 der Durchtrittsöffnung 144 der Unterlegscheibe 126 überführt, indem die Schraube 124 quer zu ihrer Längsrichtung 170 verschoben wird. Damit ist der in Fig. 4 dargestellte Zustand erreicht, in welchem sich der Schaftbereich 136 der Schraube 124 durch den ersten Bereich 146 der Durchtrittsöffnung 144 der Unterlegscheibe 126 hindurch erstreckt.

Nun wird die Schraube 124 in die Hülse 128 eingesteckt, deren Innendurchmesser D" größer ist als der Außendurchmesser D des Gewindebereichs 134 der Schraube 124.

Hierbei wird zunächst die Unterlegscheibe 126 mit dem daran festgelegten ringförmigen Element 130 von der Hülse 128 gegen den Schraubenkopf 132 geschoben, und anschließend wird der der Unterlegscheibe 126 abgewandte untere Abschnitt des Innenraums des ringförmigen Elements 130 durch den schraubenkopfseitigen Bund 140 der Hülse 128 unter Überwindung der elastischen Rückstellkraft des ringförmigen Elements 130 aufgeweitet, so dass der schraubenkopfseitige Bund 140 diesen unteren Abschnitt des ringförmigen Elements 130 passiert und in die Aufnahme 168 des ringförmigen Elements 130 gelangt, wo er durch die Hinterschneidung des ringförmigen Elements 130 festgehalten wird, so dass die Hülse 128 mit dem ringförmigen Element 130 und der Unterlegscheibe 126 verrastet ist.

Außerdem übt das zurückverformte ringförmige Element 130 einen Pressdruck auf die Außenseite 160 der Hülse 128 aus, so dass die Hülse 128 auch durch Reibschluss mit dem ringförmigen Element 130 und somit mit der Unterlegscheibe 126 verbunden ist.

Da das ringförmige Element 130 und die Aufnahme 168 koaxial zur Mittelachse 150 der Unterlegscheibe 126 ausgerichtet sind, ist auch die Hülse 128 koaxial zur Mittelachse 150 der Unterlegscheibe 126 an derselben gehalten.

Da sich ferner der untere Endbereich der Hülse 128 bis zu dem Gewindebereich 134 der Schraube 124 erstreckt und der Innendurchmesser D" der Hülse 128 nur geringfügig größer ist als der Außendurchmesser D des Gewindebereichs 134 der Schraube 124, ist die Längsrichtung 170 der Schraube 124 im wesentlichen koaxial zur Längsachse der Hülse 128 und damit zur Mittelachse 150 der Unterlegscheibe 126 angeordnet.

Nach dem Einstecken der Schraube 124 in die Hülse 128 und nach dem Einrasten des schraubenkopfseitigen Bundes 140 der Hülse 128 an dem ringförmigen Element 130 ist es daher nicht mehr möglich, die Schraube 124 aus dem mittigen ersten Bereich 146 der Durchtrittsöffnung 144 der Unterlegscheibe 126 in den außermittigen zweiten Bereich 152 der Durchtrittsöffnung 144 zu verschieben.

In diesem Zustand kann somit der Gewindebereich 134 der Schraube 124 mit dem Außendurchmesser D nicht mehr durch die Durchtrittsöffnung 144 der Unterlegscheibe 126 zurückgelangen, da der Durchmesser d' des ersten Bereichs 146 der Durchtrittsöffnung 144 kleiner ist als der Außendurchmesser D des Gewindebereichs 134. Die Hülse 128, die Unterlegscheibe 126 und das daran festgelegte ringförmige Element 130 sind somit unverlierbar an der Schraube 124 gehalten.

Im montierten Zustand der Baugruppe 100, wie er in Fig. 1 dargestellt ist, ist das Außengewinde des Gewindebereichs 134 der Schraube 124 in das Innengewinde des Gewindesackloches 108 an dem zweiten Bauteil 106 eingedreht. Die Schraube 124 und die Hülse 128 erstrecken sich durch die Durchtrittsöffnung 104 an dem ersten Bauteil 102 hindurch.

Die Hülse 128 und die Unterlegscheibe 126 stützen sich über das elastische ringförmige Element 130 an dem ersten Bauteil 102 ab, so dass die Hülse 128, die Unterlegscheibe 126 und die Schraube 124 schwingungsmäßig von dem ersten Bauteil 102 entkoppelt sind.

Durch das zwischen dem ersten Bauteil 102 und dem zweiten Bauteil 106 angeordnete elastomere Dichtelement 114, das mit seinem Bund 120 den gewindebereichseitigen Bund 142 der Hülse 128 übergreift, wird ferner eine Schwingungsentkopplung zwischen den beiden Bauteilen 102 und 106 erzielt.

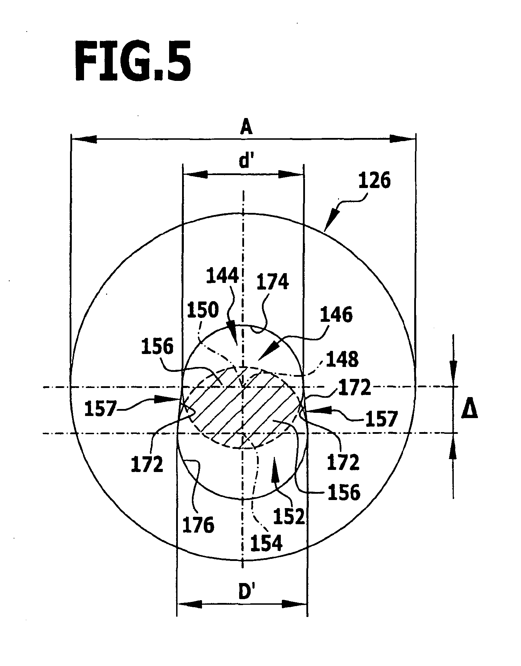

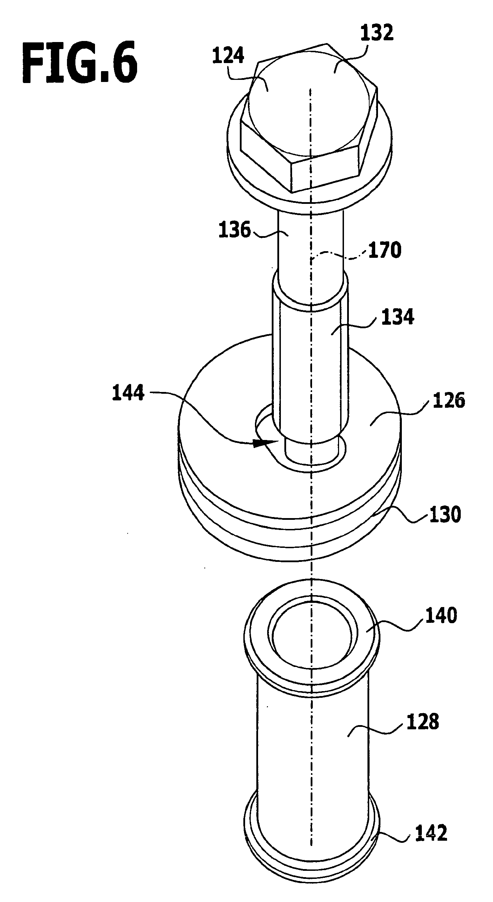

Eine in den Fig. 5 und 6 dargestellte zweite Ausführungsform einer Kombination 122 aus einer Schraube 124, einer unverlierbar an der Schraube 124 gehaltenen Hülse 128 und einer unverlierbar an der Schraube 124 gehaltenen Unterlegscheibe 126 mit daran festgelegtem ringförmigem Element 130 unterscheidet sich von der vorstehend beschriebenen ersten Ausführungsform lediglich dadurch, dass die Übergangsbereiche 157, an denen der Rand 174 des ersten Bereichs 146 und der Rand 176 des zweiten Bereichs 152 der Durchtrittsöffnung 144 ineinander übergehen, keine - von der Mittelachse 150 der Unterlegscheibe 126 aus gesehen - konvex gekrümmten Ränder aufweisen, sondern stattdessen jeweils einen Rand 172, der tangential zum Rand 174 des ersten Bereichs 146 der Durchtrittsöffnung 144 und tangential zum Rand 176 des zweiten Bereichs 152 der Durchtrittsöffnung 144 verläuft.

Die Durchtrittsöffnung 144 der Unterlegscheibe 126 hat bei dieser zweiten Ausführungsform daher keine schlüssellochförmige Gestalt, wie bei der ersten

Ausführungsform, sondern stattdessen die Form eines Langlochs mit unterschiedlichen Krümmungsradien an den beiden Enden des Langlochs.

Auch bei dieser Ausführungsform kann der Gewindebereich 134 der Schraube 124 durch den zweiten Bereich 152 der Durchtrittsöffnung 144 hindurchtreten und anschließend die Schraube 124 von dem zweiten Bereich 152 in den ersten Bereich 146 der Durchtrittsöffnung 144 verschoben werden, so dass der Gewindebereich 134 der Schraube 124 nicht mehr durch die Durchtrittsöffnung 144 zurück gelangen kann.

Im übrigen stimmt die in den Fig. 5 und 6 dargestellte zweite Ausführungsform der Kombination aus einer Schraube 124, einer Hülse 128, einer Unterlegscheibe 126 und einem ringförmigen Element 130 hinsichtlich Aufbau und Funktion sowie Herstellungsweise mit der in den Fig. 1 bis 4 dargestellten ersten Ausführungsform überein, auf deren vorstehende Beschreibung insoweit Bezug genommen wird.

## Patentansprüche

1. Kombination aus einer Schraube (124) mit einem Schraubenkopf (132), einem Gewindebereich (134) und einem zwischen dem Schraubenkopf (132) und dem Gewindebereich (134) angeordneten Schaftbereich (136), dessen Außendurchmesser (d) kleiner ist als der Außendurchmesser (D) des Gewindebereichs (134),
einer Unterlegscheibe (126) mit einer Durchtrittsöffnung (144) für die Schraube (124) und
einer Hülse (128), deren Innendurchmesser (D") größer ist als der Außendurchmesser (D) des Gewindebereichs (134) der Schraube (124), wobei die Durchtrittsöffnung (144) der Unterlegscheibe (126) einen ersten Bereich (146) umfasst, der einen Durchmesser (d') aufweist, welcher größer ist als der Außendurchmesser (d) des Schaftbereichs (136) der Schraube (124) und kleiner ist als der Außendurchmesser (D) des Gewindebereichs (134) der Schraube (124), und einen zweiten Bereich (152), der einen Durchmesser (D') aufweist, welcher größer ist als der Außendurchmesser (D) des Gewindebereichs (134) der Schraube (124), und
wobei die Hülse (128) und die Unterlegscheibe (126) so miteinander verbunden sind, dass die Hülse (128) und die Unterlegscheibe (126) unverlierbar an der Schraube (124) gehalten sind,
**dadurch gekennzeichnet,**
**dass** das Zentrum (148) des ersten Bereichs (146) der Durchtrittsöffnung (144) der Unterlegscheibe (126) im Wesentlichen mittig an der Unterlegscheibe (126) angeordnet ist.

2. Kombination nach Anspruch 1, **dadurch gekennzeichnet, dass** der erste Bereich (146) und der zweite Bereich (152) der Durchtrittsöffnung (144) so miteinander in Verbindung stehen, dass die Schraube (124) von dem zweiten Bereich (152) in den ersten Bereich (146) der Durchtrittsöffnung (144) überführbar ist, wenn sich der Schaftbereich (136) der Schraube (124) durch die Durchtrittsöffnung (144) der Unterlegscheibe (126) hindurch erstreckt.

3. Kombination nach einem der Ansprüche 1 oder 2, **dadurch gekennzeichnet, dass** der Schaftbereich (136) der Schraube (124) sich im montierten Zustand der Kombination (122) durch den ersten Bereich (146) der Durchtrittsöffnung (144) der Unterlegscheibe (126) hindurch erstreckt.

4. Kombination nach einem der Ansprüche 1 bis 3, **dadurch gekennzeichnet, dass** der erste Bereich (146) und der zweite Bereich (152) der Durchtrittsöffnung (144) der Unterlegscheibe (126) einander teilweise überlappen.

5. Kombination nach einem der Ansprüche 1 bis 4, **dadurch gekennzeichnet, dass** das Zentrum (154) des zweiten Bereichs (152) der Durchtrittsöffnung (144) der Unterlegscheibe (126) relativ zu dem Zentrum (148) des ersten Bereichs (146) der Durchtrittsöffnung (144) der Unterlegscheibe (126) nach außen versetzt ist.

6. Kombination nach einem der Ansprüche 1 bis 5, **dadurch gekennzeichnet, dass** der Rand (174) des ersten Bereichs (146) der Durchtrittsöffnung (144) der Unterlegscheibe (126) und der Rand (176) des zweiten Bereichs (152) der Durchtrittsöffnung (144) der Unterlegscheibe (126) an einem Übergangsbereich (157) ineinander übergehen, wobei der Rand (172) des Übergangsbereichs (157) - von dem Zentrum (148) des ersten Bereichs (146) der Durchtrittsöffnung (144) aus gesehen - konvex gekrümmt ist.

7. Kombination nach einem der Ansprüche 1 bis 6, **dadurch gekennzeichnet, dass** der Rand (174) des ersten Bereichs (146) der Durchtrittsöffnung (144) der Unterlegscheibe (126) und der Rand (176) des zweiten Bereichs (152) der Durchtrittsöffnung (144) der Unterlegscheibe (126) an einem Übergangsbereich (157) ineinander übergehen, wobei der Rand (172) des Übergangsbereichs (157) im Wesentlichen tangential zu dem Rand (174) des ersten Bereichs (146) der Durchtrittsöffnung (144) und/oder im Wesentlichen tangential zu dem Rand (176) des zweiten Bereichs (152) der Durchtrittsöffnung (144) verläuft.

8. Kombination nach einem der Ansprüche 1 bis 7, **dadurch gekennzeichnet, dass** die Kombination (122) mindestens ein ringförmiges Element (130) umfasst, das an der Unterlegscheibe (126) festgelegt ist und eine Aufnahme (168) für ein schraubenkopfseitiges Ende der Hülse (128) aufweist.

9. Kombination nach Anspruch 8, **dadurch gekennzeichnet, dass** das ringförmige Element (130) als ein elastisches Element ausgebildet ist.

10. Kombination nach einem der Ansprüche 8 oder 9, **dadurch gekennzeichnet, dass** das ringförmige Element (130) ein Elastomermaterial umfasst.

11. Kombination nach einem der Ansprüche 8 bis 10, **dadurch gekennzeichnet, dass** das schraubenkopfseitige Ende der Hülse (128) form- und/oder kraftschlüssig an dem ringförmigen Element (130) gehalten ist.

12. Kombination nach einem der Ansprüche 8 bis 11, **dadurch gekennzeichnet, dass** das ringförmige Element (130) mit der Unterlegscheibe (126) verklebt ist.

13. Verfahren zum Herstellen einer Kombination (122) aus einer Schraube (124) mit einem Schraubenkopf (132), einem Gewindebereich (134) und einem zwischen dem Schraubenkopf.(132) und dem Gewindebereich (134) angeordneten Schaftbereich (136), dessen Außendurchmesser (d) kleiner ist als der Außendurchmesser (D) des Gewindebereichs (134),
einer Unterlegscheibe (126) mit einer Durchtrittsöffnung (144) für die Schraube (124) und
einer Hülse (128), deren Innendurchmesser (D") größer ist als der Außendurchmesser (D) des Gewindebereichs (134) der Schraube (124), umfassend folgende Verfahrensschritte:
- Bereitstellen einer Unterlegscheibe (126) mit einer Durchtrittsöffnung (144), die einen ersten Bereich (146) umfasst, welcher einen Durchmesser (d') aufweist, der größer ist als der Außendurchmesser (d) des Schaftbereichs (136) der Schraube (124) und kleiner ist als der Außendurchmesser (D) des Gewindebereichs (134) der Schraube (124), wobei das Zentrum (148) des ersten Bereichs (146) der Durchtrittsöffnung (144) der Unterlegscheibe (126) im Wesentlichen mittig an der Unterlegscheibe (126) angeordnet ist, und
einen zweiten Bereich (152), welcher einen Durchmesser (D') aufweist, der größer ist als der Außendurchmesser (D) des Gewindebereichs (134) der Schraube (124);
- Einstecken der Schraube (124) in die Durchtrittsöffnung (144) der Unterlegscheibe (126) derart, dass der Gewindebereich (134) der Schraube (124) sich durch den zweiten Bereich (152) der Durchtrittsöffnung (144) der Unterlegscheibe (126) hindurchbewegt, bis der Schaftbereich (136) der Schraube (124) sich durch die Durchtrittsöffnung (144) hindurch erstreckt;
- Überführen des Schaftbereichs (136) der Schraube (124) von dem zweiten Bereich (152) der Durchtrittsöffnung (144) der Unterlegscheibe (126) in den ersten Bereich (146) der Durchtrittsöffnung (144) der Unterlegscheibe (126);
- Einstecken der Schraube (124) in die Hülse (128);
- Verbinden der Hülse (128) mit der Unterlegscheibe (126) derart, dass die Hülse (128) und die Unterlegscheibe (126) unverlierbar an der Schraube (124) gehalten sind.

14. Verfahren nach Anspruch 13, **dadurch gekennzeichnet, dass** das Verfahren ferner folgendes umfasst:
- Festlegen eines ringförmigen Elements (130) an der Unterlegscheibe (126);
- Verbinden der Hülse (128) mit dem ringförmigen Element (130) derart, dass die Hülse (128), das ringförmige Element (130) und die Unterlegscheibe (126) unverlierbar an der Schraube (124) gehalten sind.

## Claims

1. A combination of a screw member (124) comprising a screw head (132), a threaded portion (134) and a shank portion (136) which is arranged between the screw head (132) and the threaded portion (134) and has an external diameter (d) that is smaller than the external diameter (D) of the threaded portion,
a washer (126) incorporating a passage opening (144) for the screw member (124) and
a sleeve (128) the internal diameter (D") of which is greater than the external diameter (D) of the threaded portion (134) of the screw member (124), wherein the passage opening (144) in the washer (126) comprises a first region (146) having a diameter (d') which is greater than the external diameter (d) of the shank portion (136) of the screw member (124) and is smaller than the external diameter (D) of the threaded portion (134) of the screw member (124), and a second region (152) having a diameter (D') which is greater than the external diameter (D) of the threaded portion (134) of the screw member (124), and
wherein the sleeve (128) and the washer (126) are connected to one another in such a manner that the sleeve (128) and the washer (126) are held captive on the screw member (124),
**characterised in that**
the centre (148) of the first region (146) of the passage opening (144) in the washer (126) is arranged substantially centrally of the washer (126).

2. A combination in accordance with Claim 1, **characterised in that** the first region (146) and the second region (152) of the passage opening (144) are connected to one another in such a way that the screw member (124) can be transferred from the second region (152) into the first region (146) of the passage opening (144) when the shank portion (136) of the screw member (124) extends through the passage opening (144) in the washer (126).

3. A combination in accordance with either of Claims 1 or 2, **characterised in that** in the assembled state of the combination (122), the shank portion (136) of the screw member (124) extends through the first region (146) of the passage opening (144) in the washer (126).

4. A combination in accordance with any of Claims 1 to 3, **characterised in that** the first region (146) and the second region (152) of the passage opening (144) in the washer (126) partly overlap one another.

5. A combination in accordance with any of Claims 1 to 4, **characterised in that** the centre (154) of the second region (152) of the passage opening (144) in the washer (126) is displaced outwardly relative to the centre (148) of the first region (146) of the passage opening (144) in the washer (126).

6. A combination in accordance with any of Claims 1 to 5, **characterised in that** the edge (174) of the first region (146) of the passage opening (144) in the washer (126) and the edge (176) of the second region (152) of the passage opening (144) in the washer (126) merge into one another at a transitional zone (157), whereby - as seen from the centre (148) of the first region (146) of the passage opening (144)
- the edge (172) of the transitional zone (157) is curved convexly.

7. A combination in accordance with any of Claims 1 to 6, **characterised in that** the edge (174) of the first region (146) of the passage opening (144) in the washer (126) and the edge (176) of the second region (152) of the passage opening (144) in the washer (126) merge into one another at a transitional zone (157), whereby the edge (172) of the transitional zone (157) runs substantially tangentially to the edge (174) of the first region (146) of the passage opening (144) and/or substantially tangentially to the edge (176) of the second region (152) of the passage opening (144).

8. A combination in accordance with any of Claims 1 to 7, **characterised in that** the combination (122) comprises at least one annular element (130) which is fixed to the washer (126) and has a seating (168) for the screw head end of the sleeve (128).

9. A combination in accordance with Claim 8, **characterised in that** the annular element (130) is in the form of a resilient element.

10. A combination in accordance with either of Claims 8 or 9, **characterised in that** the annular element (130) comprises an elastomer material.

11. A combination in accordance with any of Claims 8 to 10, **characterised in that** the screw head end of the sleeve (128) is held on the annular element (130) in positive and/or force-locking manner.

12. A combination in accordance with any of claims 8 to 11, **characterised in that** the annular element (130) is adhered to the washer (126).

13. A method of making a combination (122) consisting of a screw member (124) comprising a screw head (132), a threaded portion (134) and a shank portion (136) which is arranged between the screw head (132) and the threaded portion (134) and has an external diameter (d) that is smaller than the external diameter (D) of the threaded portion (134),
a washer (126) incorporating a passage opening (144) for the screw member (124) and
a sleeve (128) the internal diameter (D") of which is greater than the external diameter (D) of the threaded portion (134) of the screw member (124), comprising the following method steps:
- preparing a washer (126) incorporating a passage opening (144) which includes a first region (146) having a diameter (d') that is greater than the external diameter (d) of the shank portion (136) of the screw member (124) and is smaller than the external diameter (D) of the threaded portion (134) of the screw member (124), wherein the centre (148) of the first region (146) of the passage opening (144) of the washer (126) is arranged substantially centrally of the washer (126), and
a second region (152) having a diameter (D') which is greater than the external diameter (D) of the threaded portion (134) of the screw member (124);
- inserting the screw member (124) into the passage opening (144) in the washer (126) in such a manner that the threaded portion (134) of the screw member (124) moves through the second region (152) of the passage opening (144) in the washer (120) until the shank portion (136) of the screw member (124) extends through the passage opening (144);
- transferring the shank portion (136) of the screw member (124) from the second region (152) of the passage opening (144) in the washer (126) into the first region (146) of the passage opening (144) in the washer (126);
- inserting the screw member (124) into the sleeve (128);
- connecting the sleeve (128) to the washer (126) in such a manner that the sleeve (128) and the washer (126) are held captive on the screw member (124).

14. A method in accordance with Claim 13, **characterised in that** the method further comprises the following:
- fixing an annular element (130) to the washer (126);
- connecting the sleeve (128) to the annular element (130) in such a manner that the sleeve (128), the annular element (130) and the washer (126) are held captive on the screw member (124).

## Revendications

1. Association composée d'une vis (124) avec une tête de vis (132), une zone filetée (134) et une zone de corps (136) disposée entre la tête de vis (132) et la zone filetée (134), dont le diamètre extérieur (d) est plus petit que le diamètre extérieur (D) de la zone filetée (134),
d'une rondelle (126) avec une ouverture de passage (144) pour la vis (124) et
d'une douille (128), dont le diamètre intérieur (D") est plus grand que le diamètre extérieur (D) de la zone filetée (134) de la vis (124), l'ouverture de passage (144) de la rondelle (126) comprenant une première zone (146) qui présente un diamètre (d') qui est plus grand que le diamètre extérieur (d) de la zone de corps (136) de la vis (124) et plus petit que le diamètre extérieur (D) de la zone filetée (134) de la vis (124), et une seconde zone (152) qui présente un diamètre (D') qui est plus grand que le diamètre extérieur (D) de la zone filetée (134) de la vis (124), et
la douille (128) et la rondelle (126) étant reliées l'une à l'autre de sorte que la douille (128) et la rondelle (126) soient maintenues de manière imperdable sur la vis (124),
**caractérisée en ce**
**que** le centre (148) de la première zone (146) de l'ouverture de passage (144) de la rondelle (126) est disposé essentiellement au milieu sur la rondelle (126).

2. Association selon la revendication 1, **caractérisée en ce que** la première zone (146) et la seconde zone (152) de l'ouverture de passage (144) sont en liaison l'une avec l'autre de sorte que la vis (124) puisse être transmise de la seconde zone (152) à la première zone (146) de l'ouverture de passage (144) lorsque la zone de corps (136) de la vis s'étend au travers de l'ouverture de passage (144) de la rondelle (126).

3. Association selon l'une quelconque des revendications 1 ou 2, **caractérisée en ce que** la zone de corps (136) de la vis (124) s'étend à l'état monté de l'association (122) au travers de la première zone (146) de l'ouverture de passage (144) de la rondelle (126).

4. Association selon l'une quelconque des revendications 1 à 3, **caractérisée en ce que** la première zone (146) et la seconde zone (152) de l'ouverture de passage (144) de la rondelle (126) se chevauchent en partie.

5. Association selon l'une quelconque des revendications 1 à 4, **caractérisée en ce que** le centre (154) de la seconde zone (152) de l'ouverture de passage (144) de la rondelle (126) est décalé vers l'extérieur par rapport au centre (148) de la première zone (146) de l'ouverture de passage (144) de la rondelle (126).

6. Association selon l'une quelconque des revendications 1 à 5, **caractérisée en ce que** le bord (174) de la première zone (146) de l'ouverture de passage (144) de la rondelle (126) et le bord (176) de la seconde zone (152) de l'ouverture de passage (144) de la rondelle (126) se fondent sur une zone de transition (157) l'un dans l'autre, le bord (172) de la zone de transition (157) étant courbé de manière convexe, vu depuis le centre (148) de la première zone (146) de l'ouverture de passage (144).

7. Association selon l'une quelconque des revendications 1 à 6, **caractérisée en ce que** le bord (174) de la première zone (146) de l'ouverture de passage (144) de la rondelle (126) et le bord (176) de la seconde zone (152) de l'ouverture de passage (144) de la rondelle (126) se fondent sur une zone de transition (157) l'un dans l'autre, le bord (172) de la zone de transition (157) s'étendant essentiellement tangentiellement au bord (174) de la première zone (146) de l'ouverture de passage (144) et/ou essentiellement tangentiellement au bord (176) de la seconde zone (152) de l'ouverture de passage (144).

8. Association selon l'une quelconque des revendications 1 à 7, **caractérisée en ce que** l'association (122) comporte au moins un élément annulaire (130) qui est fixé sur la rondelle (126) et présente un logement (168) pour une extrémité de la douille (128) côté tête de vis.

9. Association selon la revendication 8, **caractérisée en ce que** l'élément annulaire (130) est réalisé comme un élément élastique.

10. Association selon l'une quelconque des revendications 8 ou 9, **caractérisée en ce que** l'élément annulaire (130) comporte un matériau élastomère.

11. Association selon l'une quelconque des revendications 8 à 10, **caractérisée en ce que** l'extrémité de la douille (128) côté tête de vis est maintenue par complémentarité de formes et/ou à force sur l'élément annulaire (130).

12. Association selon l'une quelconque des revendications 8 à 11, **caractérisée en ce que** l'élément annulaire (130) est collé à la rondelle (126).

13. Procédé de fabrication d'une association (122) composée d'une vis (124) avec une tête de vis (132), une zone filetée (134) et une zone de corps (136) disposée entre la tête de vis (132) et la zone filetée (134), dont le diamètre extérieur (d) est plus petit que le diamètre extérieur (D) de la zone filetée (134),
d'une rondelle (126) avec une ouverture de passage (144) pour la vis (124) et
d'une douille (128), dont le diamètre intérieur (D") est plus grand que le diamètre extérieur (D) de la zone filetée (134) de la vis (124),
comportant les étapes de procédé suivante
- mise à disposition d'une rondelle (126) avec une ouverture de passage (144) qui comporte une première zone (146) qui présente un diamètre (d') qui est plus grand que le diamètre extérieur (d) de la zone de corps (136) de la vis (124) et plus petit que le diamètre extérieur (D) de la zone filetée (134) de la vis (124), le centre (148) de la première zone (146) de l'ouverture de passage (144) de la rondelle (126) étant disposé essentiellement au milieu sur la rondelle (126), et
une seconde zone (152) qui présente un diamètre (D') qui est plus grand que le diamètre extérieur (D) de la zone filetée (134) de la vis (124) ;
- insertion de la vis (124) dans l'ouverture de passage (144) de la rondelle (126) de telle sorte que la zone filetée (134) de la vis (124) se déplace au traverse de la seconde zone (152) de l'ouverture de passage (144) de la rondelle (126) jusqu'à ce que la zone de corps (136) de la vis (124) s'étende au travers de l'ouverture de passage (144) ;
- transmission de la zone de corps (136) de la vis (124) de la seconde zone (152) de l'ouverture de passage (144) de la rondelle (126) à la première zone (146) de l'ouverture de passage (144) de la rondelle (126) ;
- insertion de la vis (124) dans la douille (128) ;
- liaison de la douille (128) avec la rondelle (126) de telle sorte que la douille (128) et la rondelle (126) soient maintenues de manière imperdable sur la vis (124).

14. Procédé selon la revendication 13, **caractérisé en ce que** le procédé comporte de plus les étapes suivantes :
- fixation d'un élément annulaire (130) sur la rondelle (126) ;
- liaison de la douille (128) avec l'élément annulaire (130) de telle sorte que la douille (128), l'élément annulaire (130) et la rondelle (126) soient maintenus de manière imperdable sur la vis (124).
